# FASCICULE DE BREVET EUROPEEN

(11) **EP 1 871 718 B1**
(45) Date de publication et mention de la délivrance du brevet: **28.03.2018**
(21) Numéro de dépôt: 06726294.9
(22) Date de dépôt: 31.03.2006
(51) Int. Cl.: C03C 13/00

(54) **COMPOSITIONS POUR FIBRES DE VERRE**
GLASFASERZUSAMMENSETZUNGEN
GLASS FIBRE COMPOSITIONS

(30) Priorité: 01.04.2005 FR 0550861
(43) Date de publication de la demande: 02.01.2008
(73) Titulaire: SAINT-GOBAIN ISOVER, 92400 Courbevoie (FR)
(72) Inventeur: MAQUIN, BERTRAND, F-75015 Paris (FR); LALANDE, Jérôme, F-94500 Champigny Sur Marne (FR); LEFRERE, Yannick, F-92240 Malakoff (FR)
(74) Mandataire: Saint-Gobain Recherche
(86) Numéro de dépôt international: PCT/FR2006/050281
(87) Numéro de publication internationale: WO 2006/103376

(56) Documents cités:
- EP-B- 0 998 432
- WO-A1-03/050054
- FR-A- 1 057 552
- US-A- 2 664 359
- US-A1- 2003 015 003
- US-A1- 2003 181 306
- US-B1- 6 284 684
- PATENT ABSTRACTS OF JAPAN vol. 011, no. 193 (C-430), 20 juin 1987 (1987-06-20) & JP 62 017041 A (NIPPON SHEET GLASS CO LTD), 26 janvier 1987 (1987-01-26)

## Description

La présente invention concerne le domaine des fibres de verre ou fibres minérales présentant une forte vitesse de dissolution en milieu physiologique. Elle concerne plus particulièrement de nouvelles compositions de verre aptes à former des fibres sous forme de laines minérales pour l'isolation thermique et/ou acoustique ou pour substrats de culture hors-sol.

Les fibres minérales sont susceptibles, lorsque certains critères géométriques en terme de diamètre et/ou longueur sont respectés, de s'introduire par inhalation dans l'organisme et notamment dans les poumons, parfois jusqu'aux alvéoles pulmonaires. Pour éviter tout risque pathogène lié à une éventuelle accumulation de fibres dans l'organisme, il est apparu nécessaire de veiller à ce que les fibres présentent une faible « biopersistance », c'est-à-dire puissent être aisément et rapidement éliminées de l'organisme. La composition chimique des fibres est un paramètre majeur influençant cette capacité à être éliminées rapidement de l'organisme, car elle joue un rôle considérable sur la vitesse de dissolution des fibres en milieu physiologique. Des fibres minérales présentant de fortes vitesses de dissolution en milieu physiologique (« biosolubles ») ont donc été formulées et décrites dans l'art antérieur.

La principale difficulté consiste toutefois à augmenter la vitesse de dissolution des fibres en milieu physiologique tout en conservant une faisabilité industrielle, et notamment une bonne aptitude à être fibrées, ainsi que les bonnes propriétés d'usage du produit fini. Parmi les propriétés influençant la faisabilité industrielle figurent au premier plan la viscosité et les propriétés de dévitrification (température de liquidus et vitesses de cristallisation). Les propriétés d'usage les plus importantes sont la résistance mécanique (principalement le module de Young ou module élastique et la ténacité), la résistance aux températures élevées et la résistance à l'humidité ou résistance hydrolytique. Ce dernier point est particulièrement crucial et délicat, car les deux critères de résistance hydrolytique et de biosolubilité sont à de nombreux égards contradictoires puisqu'ils concernent tous les deux la capacité à se dissoudre dans un milieu majoritairement aqueux. Les exigences en terme de résistance à l'humidité sont toutefois de plus en plus fortes dans de nombreuses applications, en particulier dans le domaine des laines de verre utilisées pour la réalisation de panneaux pour la construction, notamment de panneaux dits « sandwichs », dans lesquels la laine minérale constitue une âme isolante entre deux panneaux métalliques (par exemple en acier ou aluminium). Il importe en effet que la résistance mécanique et notamment la résistance à l'arrachement de ces produits soumis à l'humidité ambiante ne s'affaiblisse pas avec le temps. Ces différentes exigences sont en particulier spécifiées dans le projet de norme prEN 14509 « Panneaux sandwiches autoportants, isolants, double peau à parements métalliques - Produits manufacturés - Spécifications ».

Il est connu du document de brevet FR 2650821 des compositions de laine minérale du type « laine de verre » biosolubles et présentant toutefois de bonnes propriétés de résistance à l'humidité de l'ordre de 16 à 25mg/g (exprimées en valeurs « DGG »), soit proches des valeurs obtenues pour la composition de référence non biosoluble. Le brevet EP 1 218 304 décrit également des compositions de laine de verre biosolubles, présentant des valeurs de dissolution DGG de l'ordre de 24 à 32mg/g. De telles valeurs se révèlent toutefois encore trop élevées compte tenu de certaines exigences actuelles : la résistance à l'arrachement dans les conditions spécifiées dans le projet de norme prEN 14509 susmentionné est en particulier insuffisante.

Le brevet EP 0 998 432 B1 décrit des laines minérales comprenant 38-52% SiO₂, 16-23% Al₂O₃, 4-15% CaO+MgO, 16-25% Na₂O+K₂O, 0-10% B₂O₃, 0-3% Fe₂O₃, 0-3% P₂O₅ et 0-2% TiO₂. La demande US2003/0015003 décrit des fibres de verre résistant à l'humidité et biosolubles consistant essentiellement en 38-52% SiO₂, 8-17% Al₂O₃, 7-17% B₂O₃, 0-7% CaO+MgO, 20-31% Na₂O+K₂O et 0-2,5% Li₂O.

L'invention a donc pour but de proposer de nouvelles compositions de verre aptes à former des fibres présentant de fortes vitesses de dissolution en milieu physiologique et une très forte résistance hydrolytique (de très faibles valeurs « DGG »), ainsi qu'une bonne capacité à être fibrées et de bonnes propriétés de résistance mécanique (en particulier après vieillissement en milieu humide) et aux températures élevées.

L'invention a pour objet des fibres de verre susceptibles de se dissoudre dans un milieu physiologique et se présentant sous forme de laine minérale présentant une composition chimique comprenant les constituants suivants dans les limites définies ci-après exprimées en pourcentages pondéraux :

| | |
|---|---|
| SiO₂ | 44 à 46,7 |
| Al₂O₃ | 18 à 21 |
| CaO | 1 à 8 |
| MgO | 0 à 3,5 |
| Na₂O | 15 à 21 |
| K₂O | 3 à 6 |
| B₂O₃ | 0 à 5 |
| Fe₂O₃ | 0 à 3 |
| P₂O₅ | 0 à 3. |

La silice est un oxyde formateur du réseau vitreux, et joue un rôle essentiel pour sa stabilité, tant thermique que chimique. La teneur en silice est également limitée car cet oxyde s'est révélé préjudiciable à la biosolubilité en milieu acide.

L'alumine joue un rôle particulièrement important dans le cadre de la présente invention. En tant qu'élément formateur de réseau cet oxyde joue un rôle primordial sur la stabilité thermique et la résistance mécanique. Son intérêt réside également dans sa capacité à améliorer la résistance hydrolytique en même temps que la vitesse de dissolution en milieu acide (et donc la biosolubilité du verre).

Les oxydes alcalins jouent un rôle de modificateur du réseau vitreux, c'est-à-dire qu'ils s'insèrent dans la structure vitreuse en rompant certaines liaisons covalentes réalisées entre les éléments formateurs du réseau. Leur effet dans la présente invention est, à l'instar de l'alumine, multiple. L'oxyde de sodium possède un rôle de fluidifiant et permet donc de diminuer la viscosité du verre, facilitant le formage, des températures de fibrage trop élevées diminuant drastiquement la durée de vie des organes de fibrage. Pour cette raison, la teneur en oxyde de sodium est supérieure ou égale à 15%, voire à 16%. Son rôle est toutefois négatif sur la résistance hydrolytique. Les verres obtenus se révèlent néanmoins extrêmement résistants à l'humidité, ce qui est particulièrement étonnant et inattendu eu égard aux très fortes teneurs en oxydes alcalins, et particulièrement en oxyde de sodium des verres selon l'invention. L'introduction d'oxyde de potassium permet de diminuer la température de liquidus tout en diminuant la viscosité du verre, ce qui contribue à améliorer la fibrabilité et donc la qualité des produits fibrés. Pour cette raison, l'oxyde de potassium est présent à des teneurs supérieures ou égales à 3%, et même à 4%. Il s'est révélé en outre que contrairement à l'oxyde de sodium, l'oxyde de potassium n'améliore pas la biosolubilité des verres dans ce domaine particulier de compositions, ce qui contribue à limiter la teneur en cet oxyde, pour favoriser au contraire l'introduction d'oxyde de sodium.

Les oxydes alcalino-terreux, principalement CaO et MgO, jouent également le rôle de modificateurs du réseau vitreux. Leur présence est bénéfique sur les propriétés de biosolubilité et de résistance à l'humidité (pour cette dernière propriété, en comparaison avec l'oxyde de sodium). En termes de biosolubilité, la présence de MgO s'est révélée encore plus avantageuse que celle de CaO. La teneur en MgO des verres selon l'invention est donc de préférence supérieure ou égale à 1%. La viscosité à haute température des verres est également diminuée par l'introduction des ces oxydes, mais dans une moindre mesure que par l'introduction d'oxyde de sodium. En termes de dévitrification, ces deux oxydes jouent toutefois un rôle différent, voire parfois opposé. Si l'introduction de CaO dans des teneurs modérées permet d'obtenir une diminution des températures de liquidus, en particulier lorsqu'il remplace l'oxyde de sodium, ce qui était tout à fait inattendu, l'oxyde de magnésium augmente au contraire très fortement ces mêmes températures. Pour cette raison, la teneur en MgO est inférieure ou égale à 3,5%, voire à 3%. Pour de fortes teneurs en CaO, la température de liquidus augmente toutefois dans de fortes proportions.

L'oxyde de bore est intéressant pour diminuer la viscosité du verre et améliorer la biosolubilité des fibres. Sa présence tend en outre à améliorer les propriétés d'isolation thermique de la laine minérale, notamment en abaissant son coefficient de conductivité thermique dans sa composante radiative. Il semble en revanche augmenter les températures de liquidus, ce qui est assez surprenant. En outre, il présente un coût élevé et une aptitude à se volatiliser à haute température, engendrant des émanations nocives et obligeant les sites de production à s'équiper en installations de retraitement des fumées.

L'oxyde de fer est limité à une teneur inférieure à 3% du fait de son rôle sur la coloration du verre, mais également sur la faculté du verre à dévitrifier. Une teneur en fer élevée permet de conférer une résistance à très haute température aux laines minérales du type « laine de roche », mais rend le fibrage par centrifugation interne difficile voire impossible dans certains cas.

L'oxyde de phosphore (P₂O₅) peut être avantageusement utilisé, notamment du fait de son rôle bénéfique sur la biosolubilité. Sa teneur est toutefois avantageusement limitée à 2%, voire 1%. Compte tenu de son coût et de son influence négative sur la viscosité du verre, les verres selon l'invention ne contiennent de préférence pas d'oxyde de phosphore, excepté d'inévitables traces provenant des matières premières.

Les fibres selon l'invention peuvent également contenir d'autres oxydes, en une teneur massique ne dépassant généralement pas 3%, voire 2% et même 1%. Parmi ces oxydes figurent les impuretés communément apportées par les matières premières naturelles ou artificielles (par exemple le verre recyclé, appelé calcin) utilisées dans ce type d'industrie (parmi les plus courantes figurent TiO₂, MnO, BaO...). Des impuretés telles que ZrO₂ sont également couramment apportées par la dissolution partielle dans le verre d'éléments chimiques provenant des matériaux réfractaires servant à la construction des fours. Certaines traces proviennent encore des composés employés pour l'affinage du verre : on citera en particulier l'oxyde de soufre SO₃ très couramment employé. Des oxydes alcalino-terreux tels que BaO, SrO, et/ou alcalins tels que Li₂O peuvent être volontairement inclus dans les fibres selon l'invention. Compte tenu de leur coût, il est toutefois préférable que les fibres selon l'invention n'en contiennent pas. Ces divers oxydes, du fait de leur faible teneur, ne jouent en tout état de cause aucun rôle fonctionnel particulier pouvant modifier la manière dont les fibres selon l'invention répondent au problème posé.

Les fibres de verre selon l'invention se présentent sous forme de laine minérale de type « laine de verre », pouvant être obtenue par un procédé de centrifugation interne, c'est-à-dire en ayant recours à des centrifugeurs (« assiettes ») tournant à grande vitesse et percés d'orifices.

Dans ce cas il est préférable que la température de liquidus, qui fixe la limite de température inférieure à laquelle il est possible de fibrer le verre, soit inférieure à 1150°C, notamment inférieure à 1100°C, voire à 1060°C. Des températures plus élevées impliqueraient en effet une limitation inacceptable de la durée de vie des assiettes de fibrage, voire une modification des matériaux constitutifs desdites assiettes. Afin d'obtenir des fibres de bonne qualité et d'assurer une bonne marche des installations, la marge de formage, c'est-à-dire la différence entre la température à laquelle la viscosité du verre est de 1000 poises et la température de liquidus est de préférence supérieure ou égale à 0, et avantageusement supérieure ou égale à 10°C, notamment à 25°C, voire à 50°C et même à 100°C, Les laines de verre selon l'invention présentent de préférence des valeurs de dissolution DGG inférieures à 18mg/g, notamment inférieures ou égales à 16mg/g, voire 12mg/g et même 10mg/g.

Pour atteindre une combinaison de telles propriétés, une optimisation de la composition a permis d'aboutir à un domaine particulièrement préféré.

La teneur en silice est supérieure ou égale à 44%. Elle est inférieure ou égale à 46,7%, notamment ou 46,5%, et même à 46%. La silice est en effet un oxyde augmentant la résistance des verres aux acides et donc diminuant la biosolubilité des fibres en milieu acide. Une teneur trop faible impliquerait en revanche une faible stabilité vis-à-vis de la dévitrification.

Compte tenu des diverses influences de l'alumine relatées *supra* et notamment sa forte influence sur la température de liquidus d'une part et la biosolubilité d'autre part, la teneur en alumine est supérieure ou égale à 18%, notamment à 18,5% et inférieure ou égale à 21% et même 20%. Une plage particulièrement préférée se situe entre 18 et 20%, pour laquelle de très faibles valeurs de dissolution DGG sont obtenues.

Compte tenu des rôles contradictoires de la silice et de l'alumine sur la biosolubilité en milieu acide, il a été observé que les valeurs de biosolubilité les plus fortes étaient obtenues en fixant le rapport SiO₂/Al₂O₃ entre 2,2 et 2,5, de préférence entre 2,2 et 2,4.

Les teneurs en oxyde de sodium sont supérieures ou égales à 15%, notamment à 16%, voire à 16,5% et inférieures ou égales à 21%, principalement du fait de son action en tant que fluidifiant. Les plus faibles valeurs de dissolution DGG sont toutefois obtenues lorsque la teneur en oxyde de sodium est inférieure ou égale à 20%, voire même à 19% ou 18,5%. Compte tenu de son rôle bénéfique sur la température de liquidus, l'oxyde de potassium est de préférence présent dans des proportions supérieures ou égales à 4%, voire à 4,5% et inférieures ou égales à 6%, notamment à 5,5%. La teneur totale en oxydes alcalins est avantageusement supérieure ou égale à 21%, voire 22%. Malgré ces valeurs particulièrement élevées, les verres selon ce mode de réalisation présentent de manière surprenante des valeurs de dissolution DGG extrêmement basses.

L'oxyde de calcium est présent dans la composition selon l'invention dans une teneur avantageusement supérieure ou égale à 4%, voire à 5% et inférieure ou égale à 8%, et notamment à 7%. Son introduction au détriment de l'oxyde de sodium s'est révélée étonnamment bénéfique sur la température de liquidus. L'oxyde de magnésium, du fait de son influence sur la température de liquidus, est présent dans des proportions inférieures ou égales à 3,5%, voire 3,2%. Du fait de son influence sur la biosolubilité, sa teneur est avantageusement supérieure ou égale à 1%.

La teneur en oxyde de bore est inférieure ou égale à 5%, voire à 4,5% et supérieure ou égale à 3% (du fait de son rôle bénéfique sur la biosolubilité).

L'oxyde de fer est présent dans des teneurs comprises entre 0 et 3%, en particulier entre 1 et 3%, et notamment de l'ordre de 2%. La présence d'oxyde de fer permet en effet de limiter la corrosion des assiettes de fibrage par le verre chaud.

La composition selon l'invention présente une biosolubilité accrue, une marge de formage positive et des valeurs de dissolution DGG jusqu'à environ 16mg/g.

Une composition selon l'invention particulièrement préférée comprend les constituants suivants dans les limites définies ci-après exprimées en pourcentages pondéraux :

| | |
|---|---|
| SiO2 | 44 à 46 |
| Al₂O₃ | 18 à 20 |
| CaO | 4 à 8 |
| MgO | 1 à 3,2 |
| Na₂O | 16,5 à 18,5 |
| K₂O | 4 à 5 |
| B₂O₃ | 3 à 5 |
| Fe₂O₃ | 0 à 3 |
| P₂O₅ | 0 à 3 |

Une telle composition permet en effet de combiner des valeurs de dissolution DGG inférieures à 10mg/g, voire inférieures à 9mg/g avec de très fortes vitesses de dissolution en milieu physiologique et une marge de formage supérieure à 10°C.

L'invention a encore pour objet des produits d'isolation thermique et/ou acoustique comprenant les fibres de verre selon l'invention, en particulier des éléments de construction du type « sandwich », dans lesquels la laine minérale constitue une âme isolante entre deux panneaux métalliques (par exemple en acier ou aluminium). Ces éléments servent à la construction de parois internes ou externes ou de toitures.

L'invention a également pour objet un procédé de fabrication des fibres selon l'invention. Ce procédé peut être du type « centrifugation interne », c'est-à-dire en ayant recours à des centrifugeurs tournant à grande vitesse et percés d'orifices, les fibres obtenues étant ensuite étirées par un jet gazeux.

L'invention a enfin pour objet l'utilisation des fibres selon l'invention en tant que matériaux d'isolation thermique et/ou acoustique, substrats de culture hors sol, et notamment dans la réalisation de systèmes constructifs de type « sandwich », dans lesquels la laine minérale constitue une âme isolante entre deux panneaux métalliques (par exemple en acier ou aluminium).

Les avantages présentés par les fibres de verre selon l'invention seront mieux appréciés à travers les exemples suivants, illustrant la présente invention sans toutefois la limiter.

Le tableau 1 rassemble des compositions de verre selon l'invention ainsi que leurs propriétés.

La composition des verres est exprimée en pourcentages massiques d'oxydes. Les impuretés inévitables provenant des matières premières, des agents affinants ou des matériaux réfractaires du four, dont certaines ne sont du reste pas analysées, n'ont été transcrites que dans leur teneur totale. Il est bien apparent pour l'homme du métier que ces impuretés, présentes à des teneurs généralement inférieures à 1%, voire à 0,5% dans les exemples qui suivent, ne jouent aucun rôle fonctionnel dans le cadre de la présente invention.

Afin d'illustrer les avantages des compositions de verre selon l'invention, le tableau 1 présente les propriétés fondamentales suivantes :
- la température correspondant à une viscosité de 10² poises, notée « Tlog2 » et exprimée en degrés Celsius, correspondant à la température minimale à laquelle il convient de chauffer le bain de verre pour pouvoir obtenir une pâte de verre homogène et sans inclusions gazeuses,
- la température correspondant à une viscosité de 10^{2,5} poises, notée « Tlog2,5 » et exprimée en degrés Celsius,
- la température correspondant à une viscosité de 10³ poises, notée « Tlog3 » et exprimée en degrés Celsius, correspondant à la température de fibrage,
- la température de liquidus, notée « Tliq », correspondant à la température en dessous de laquelle se forment les premiers cristaux,
- la marge de formage correspondant à la différence entre Tlog3 et Tliq, notée « ΔT » et exprimée en degrés Celsius,
- la valeur de dissolution « DGG », notée « DGG » : selon cette méthode on plonge une poudre de verre broyée pour constituer une poudre de granulométrie de 360 à 400 micromètres dans de l'eau chauffée à reflux pendant 5 heures. Après un refroidissement rapide, on filtre le mélange et l'on effectue une mesure de matière sèche contenue dans le filtrat. La valeur de dissolution « DGG » exprime la quantité de matière dissoute exprimée en milligrammes par gramme de verre traité,
- la vitesse de dissolution en milieu acide, notée « kSiO₂ », représentant la vitesse de dissolution de fibres d'un diamètre de 10 micromètres laissées 6 heures en solution saline statique tamponnée à un pH de 4,5. La solution saline contient, en plus du tampon pH, du chlorure de sodium et du citrate de sodium dans des concentrations respectives de 5g/L et 0,15g/L, le rapport entre la surface de verre exposée et le volume de la solution d'attaque étant de 0,5 cm⁻¹. Cette vitesse de dissolution, exprimée en ng/cm².h, exprime la quantité de verre dissoute par unités de surface de fibres et de temps.

L'exemple C1 est un exemple comparatif du type « laine de verre », correspondant à l'exemple 3 du document EP 1 218 304. Ce type de composition procure des valeurs de dissolution DGG trop importantes pour certaines applications, notamment pour les applications du type « sandwich », où les panneaux de laine minérale sont soumis à de fortes exigences en terme de résistance à l'humidité.

Les exemples selon l'invention montrent qu'il est possible d'améliorer cette propriété tout en ne sacrifiant pas les propriétés de biosolubilité et la capacité à être fibrée. Les exemples 9, 10 et 12 à 15 démontrent qu'il est même possible de diminuer cette propriété à des valeurs inférieures à 10mg/g, ce par un choix particulier des teneurs en silice, alumine et oxydes alcalins, tout en obtenant des marges de formage positives, et même supérieures ou égales à 10°C et une vitesse de dissolution en milieu acide supérieure à 25000 ng/cm².h.

Les exemples 1 et 2 montrent que la silice est préjudiciable à la biosolubilité des fibres, des teneurs supérieures à 47% étant associées à des valeurs de kSiO₂ inférieures à 15000ng/cm².h.

Un effet étonnant de l'oxyde de sodium dans le cadre de la présente invention réside dans son effet d'augmentation de la température de liquidus. Cet effet se distingue notamment en comparant les exemples 4 et 5, une augmentation de 2,3% de la teneur en oxyde de sodium essentiellement compensée sur la silice provoquant une élévation de 40°C de la température de liquidus. Dans la plupart des verres connus, cet oxyde possède pourtant un rôle totalement opposé. Une explication possible de ce phénomène inattendu résiderait dans le fait que la plupart des verres selon l'invention ont tendance à dévitrifier en formant des cristaux de type « néphéline » de formule (Na, K)AlSiO₄.

Des teneurs en oxyde de sodium supérieures ou égales à 18,5% couplées avec des teneurs en silice inférieures ou égales à 44% (et éventuellement des teneurs en alumine supérieures ou égales à 20%) ont pour conséquence des marges de formage négatives, ce qui est préjudiciable au fibrage des verres, même s'il ne le rend pas impossible (des facteurs cinétiques tels que la vitesse de cristallisation interviennent). Les exemples 4, 5, 8 et 11 illustrent ce point.

Les exemples 17 à 20 et 22 montrent que la substitution de l'oxyde de sodium par de la chaux permet d'améliorer de manière intéressante la valeur de dissolution DGG, sans modifier trop sensiblement la capacité à être formé ou la valeur de kSiO₂. Les exemples 19, 20 et 22 sont en particulier préférés car ils combinent une marge de formage élevée (plus de 50°C) avec une faible DGG (10mg/g ou moins) tout en présentant une solubilité convenable en milieu physiologique (plus de 20000 ng/cm².h).

Des panneaux sandwich comprenant des laines minérales dont les compositions correspondent à celle des exemples C1, 6, 9, 17 et 20 et dont la densité est proche de 60kg/m³ ont été soumis au test de résistance à l'arrachement après vieillissement en milieu humide décrit dans le projet de norme prEN 14509 « Panneaux sandwiches autoportants, isolants, double peau à parements métalliques - Produits manufacturés - Spécifications ». Selon ce test, les panneaux sandwich sont placés pendant 28 jours dans un caisson climatique à 65°C et 100% d'humidité relative et la perte de résistance à l'arrachement après cette étape de vieillissement ne doit pas excéder 60%.

Le tableau 2 ci-après indique pour chacune des compositions testées la perte de résistance à l'arrachement après vieillissement (en %).

**Tableau 2**

| Exemple | Perte de résistance à l'arrachement (%) |
|---|---|
| C1 | 80-85% |
| 6 | 20-28% |
| 9 | 14-34% |
| 17 | 30% |
| 20 | 20-44% |

Tandis que la perte de résistance à l'arrachement de l'échantillon comparatif C1 témoigne de sa piètre résistance en milieu humide, les échantillons 6, 9, 17 et 20 présentent une perte de résistance bien inférieure à 60%. Les fibres de verre selon l'invention présentent ainsi un comportement remarquablement amélioré en termes de résistance en milieu humide.

**Tableau 1**

| | **C1** | **1*** | **2*** | **3** | **4*** | **5*** | **6** | **7** | **8*** | **9** | **10** | |
|---|---|---|---|---|---|---|---|---|---|---|---|---|
| SiO₂ (%) | 63,4 | 47,9 | 47,3 | 44,7 | 42,2 | 40,0 | 44,4 | 44,2 | 43,9 | 46,0 | 44,9 | |
| Al₂O₃ (%) | 1,7 | 18,1 | 16,8 | 19,0 | 20,0 | 20,1 | 19,0 | 19,0 | 18,8 | 18,8 | 18,9 | |
| Fe₂O₃ (%) | 0,1 | 1,92 | 2,2 | 2,2 | 2,2 | 2,3 | 2,1 | 2,2 | 2,1 | 2,0 | 2,0 | |
| CaO (%) | 6,8 | 3,45 | 3,8 | 4,3 | 4,8 | 4,6 | 4,3 | 4,3 | 6,2 | 6,2 | 6,15 | |
| MgO (%) | 3,6 | 0,4 | 0,4 | 1,3 | 1,4 | 1,4 | 1,4 | 1,3 | 1,3 | 1,3 | 1,31 | |
| Na₂O (%) | 17,6 | 18 | 19,2 | 19,2 | 18,5 | 20,8 | 19,0 | 19,0 | 19,0 | 16,9 | 17,8 | |
| K₂O (%) | 0,9 | 4,45 | 4,5 | 4,5 | 4,8 | 5,0 | 5,2 | 4,5 | 4,5 | 4,5 | 4,5 | |
| B₂O₃ (%) | 5,9 | 5,05 | 5,2 | 4,1 | 5,35 | 5,1 | 4,1 | 5,0 | 3,8 | 3,8 | 3,9 | |
| Impuretés | | 0,7 | 0,6 | 0,7 | 0,75 | 0,7 | 0,5 | 0,5 | 0,4 | 0,5 | 0,5 | |
| Tlog2 (°C) | | 1398 | 1355 | 1367 | 1362 | 1304 | 1367 | 1353 | 1322 | 1374 | 1353 | |
| Tlog2,5 (°C) | | 1255 | 1213 | 1232 | 1225 | 1176 | 1232 | 1218 | 1194 | 1241 | 1220 | |
| Tlog3 (°C) | | 1141 | 1100 | 1124 | 1117 | 1072 | 1123 | 1109 | 1092 | 1135 | 1114 | |
| Tliq (°C) | | 1010 | 960 | 1070 | 1130 | 1170 | 1060 | 1080 | 1110 | 1060 | 1090 | |
| ΔT (°C) | | 131 | 140 | 54 | -13 | -98 | 63 | 29 | -18 | 75 | 24 | |
| DGG | 24 | 13,5 | 14,5 | 16,9 | 14,1 | 19,4 | 15,1 | 12,9 | 10,1 | 9,7 | 10,1 | |
| kSiO₂ (x10³) | | 12,4 | 5,1 | 25,0 | 37,3 | 57,5 | 24,3 | 29,8 | 41,8 | 24,6 | 30,6 | |

| | **11*** | **12** | **13** | **14** | **15** | **16*** | **17** | **18** | **19** | **20*** | **21*** | **22*** |
|---|---|---|---|---|---|---|---|---|---|---|---|---|
| SiO2 (%) | 43,7 | 46,0 | 44,9 | 44,9 | 45,0 | 43,0 | 46,5 | 46,6 | 46,6 | 46,7 | 46,8 | 46,7 |
| Al₂O₃ (%) | 18,8 | 18,8 | 18,9 | 19,8 | 19,7 | 20,0 | 18,0 | 18,0 | 18,0 | 18,0 | 18,1 | 18,1 |
| Fe₂O₃ (%) | 2,1 | 2,1 | 2,1 | 2,1 | 2,1 | 2,0 | 2,0 | 2,0 | 2,0 | 2,0 | 2,0 | 2,0 |
| CaO (%) | 4,2 | 4,2 | 4,3 | 6,3 | 4,2 | 8,2 | 5,5 | 6,4 | 7,35 | 8,3 | 4,4 | 9,2 |
| MgO (%) | 3,18 | 3,2 | 3,14 | 1,31 | 3,1 | 1,3 | 0,5 | 0,5 | 0,5 | 0,5 | 2,0 | 0,5 |
| Na₂O (%) | 19,0 | 16,8 | 17,9 | 16,7 | 16,7 | 15,0 | 18,2 | 17,2 | 16,2 | 15,2 | 17,3 | 14,1 |
| K₂O (%) | 4,5 | 4,2 | 4,5 | 4,5 | 4,5 | 6,5 | 5,35 | 5,35 | 5,35 | 5,35 | 5,4 | 5,4 |
| B₂O₃ (%) | 4,0 | 3,8 | 3,8 | 3,9 | 4,0 | 4,0 | 4,0 | 4,0 | 4,0 | 4,0 | 4,0 | 4,0 |
| Impuretés | 0,5 | 0,9 | 0,5 | 0,5 | 0,7 | 0 | 0 | 0 | 0 | 0 | 0 | 0 |
| Tlog2 (°C) | 1339 | 1383 | 1362 | 1375 | 1385 | | 1344 | 1345 | 1343 | 1347 | | 1352 |
| Tlog2,5 (°C) | 1208 | 1252 | 1232 | 1244 | 1259 | | 1214 | 1216 | 1218 | 1223 | | 1230 |
| Tlog3 (°C) | 1105 | 1146 | 1129 | 1139 | 1156 | 1150 | 1108 | 1111 | 1116 | 1123 | | 1131 |
| Tliq (°C) | 1130 | 1090 | 1110 | 1120 | 1130 | 1090 | 1050 | 1070 | 1060 | 1060 | 1060 | 1070 |
| ΔT (°C) | -25 | 56 | 19 | 19 | 26 | 60 | 58 | 41 | 56 | 63 | | 61 |
| DGG | 13,2 | 9,7 | 8,9 | 9,4 | 9,8 | | 13,7 | 12,4 | 10,1 | 10,8 | | 9,8 |
| kSiO₂ (x10³) | 45,7 | 25,0 | 37,3 | 28,3 | 30,8 | | 21,3 | 21,6 | 21,1 | 20,9 | 20,5 | 23,0 |

| | | | | | | | | | | | | |
|---|---|---|---|---|---|---|---|---|---|---|---|---|
| * : hors invention | | | | | | | | | | | | |

## Revendications

1. Fibre de verre susceptible de se dissoudre dans un milieu physiologique et se présentant sous forme de laine minérale, **caractérisée en ce qu'**elle présente une composition chimique comprenant les constituants suivants dans les limites définies ci-après exprimées en pourcentages pondéraux :
| | |
|---|---|
| SiO₂ | 44 à 46,7 |
| Al₂O₃ | 18 à 21 |
| CaO | 1 à 8 |
| MgO | 0 à 3,5 |
| Na₂O | 15 à 21 |
| K₂O | 3 à 6 |
| B₂O₃ | 0 à 5 |
| Fe₂O₃ | 0 à 3 |
| P₂O₅ | 0 à 3. |

2. Fibre de verre selon la revendication 1, dans laquelle la teneur en oxyde de sodium est supérieure ou égale à 16%.

3. Fibre de verre selon l'une des revendications précédentes, dans laquelle la teneur totale en oxydes alcalins est supérieure ou égale à 21%.

4. Fibre de verre selon l'une des revendications précédentes, dans laquelle la teneur en alumine est comprise entre 18 et 20%.

5. Fibre de verre selon l'une des revendications précédentes, telle que le rapport SiO₂/Al₂O₃ est compris entre 2,2 et 2,5.

6. Fibre de verre selon l'une des revendications précédentes, dans laquelle la teneur en oxyde de potassium est supérieure ou égale à 4%.

7. Fibre de verre selon l'une des revendications précédentes, dans laquelle la teneur en oxyde de calcium est supérieure ou égale à 4%.

8. Fibre de verre selon l'une des revendications précédentes, dans laquelle la teneur en oxyde de magnésium est supérieure ou égale à 1%.

9. Fibre de verre selon l'une des revendications précédentes, dans laquelle la teneur en oxyde de bore est inférieure ou égale à 4,5%.

10. Fibre de verre selon l'une des revendications précédentes, dans laquelle l'oxyde de fer est présent dans des teneurs comprises entre 1 et 3%.

11. Fibre de verre selon la revendication 1, présentant une composition chimique comprenant les constituants suivants dans les limites définies ci-après exprimées en pourcentages pondéraux :
| | |
|---|---|
| SiO₂ | 44 à 46 |
| Al₂O₃ | 18 à 20 |
| CaO | 4 à 8 |
| MgO | 1 à 3,2 |
| Na₂O | 16,5 à 18,5 |
| K₂O | 4 à 5 |
| B₂O₃ | 3 à 5 |
| Fe₂O₃ | 0 à 3 |
| P₂O₅ | 0 à 3. |

12. Fibre de verre selon l'une des revendications précédentes, susceptible d'être obtenue par un procédé de centrifugation interne.

13. Utilisation des fibres de verre selon l'une des revendications 1 à 12 en tant que matériaux d'isolation thermique et/ou acoustique, substrats de culture hors sol.

14. Élément de construction comprenant des fibres de verre selon l'une des revendications 1 à 12 en tant qu'âme isolante entre deux panneaux métalliques.

15. Procédé de fabrication des fibres selon l'une des revendications 1 à 12 par centrifugation interne.

## Patentansprüche

1. Glasfaser, die in einem physiologischen Milieu löslich ist und in Form von Mineralwolle vorliegt, **dadurch gekennzeichnet, dass** sie eine chemische Zusammensetzung aufweist, die die folgenden Bestandteile in den nachfolgend festgelegten Grenzen, ausgedrückt in Gewichtsprozenten, umfasst:
| | |
|---|---|
| SiO₂ | 44 bis 46,7 |
| Al₂O₃ | 18 bis 21 |
| CaO | 1 bis 8 |
| MgO | 0 bis 3,5 |
| Na₂O | 15 bis 21 |
| K₂O | 3 bis 6 |
| B₂O₃ | 0 bis 5 |
| Fe₂O₃ | 0 bis 3 |
| P₂O₅ | 0 bis 3. |

2. Glasfaser nach Anspruch 1, wobei der Gehalt an Natriumoxid größer oder gleich 16 % ist.

3. Glasfaser nach einem der vorangehenden Ansprüche, wobei der Gehalt insgesamt an alkalischen Oxiden größer oder gleich 21 % ist.

4. Glasfaser nach einem der vorangehenden Ansprüche, wobei der Gehalt an Aluminiumoxid zwischen 18 und 20 % insgesamt beträgt.

5. Glasfaser nach einem der vorangehenden Ansprüche derart, dass das Verhältnis SiO₂/Al₂O₃ zwischen 2,2 und 2,5 inklusive beträgt.

6. Glasfaser nach einem der vorangehenden Ansprüche, wobei der Gehalt an Kaliumoxid größer oder gleich 4 % ist.

7. Glasfaser nach einem der vorangehenden Ansprüche, wobei der Gehalt an Kalziumoxid größer oder gleich 4 % ist.

8. Glasfaser nach einem der vorangehenden Ansprüche, wobei der Gehalt an Magnesiumoxid größer oder gleich 1% ist.

9. Glasfaser nach einem der vorangehenden Ansprüche, wobei der Gehalt an Boroxid kleiner oder gleich 4,5 % ist.

10. Glasfaser nach einem der vorangehenden Ansprüche, wobei das Eisenoxid in Gehalten zwischen 1 und 3 % inklusive vorhanden ist.

11. Glasfaser nach Anspruch 1, eine chemische Zusammensetzung aufweisend, die die folgenden Bestandteile in den nachfolgend festgelegten Grenzen, ausgedrückt in Gewichtsprozenten, umfasst:
| | |
|---|---|
| SiO₂ | 44 bis 46 |
| Al₂O₃ | 18 bis 20 |
| CaO | 4 bis 8 |
| MgO | 1 bis 3,2 |
| Na₂O | 16,5 bis 18,5 |
| K₂O | 4 bis 5 |
| B₂O₃ | 3 bis 5 |
| Fe₂O₃ | 0 bis 3 |
| P₂O₅ | 0 bis 3. |

12. Glasfaser nach einem der vorangehenden Ansprüche, die mittels eines Innenzentrifugationsverfahrens herstellbar ist.

13. Verwendung der Glasfasern nach einem der Ansprüche 1 bis 12 als Material für die Wärme- und/oder Schalldämmung, erdlose Kultursubstrate.

14. Bauelement, umfassend Glasfasern nach einem der Ansprüche 1 bis 12 als isolierende Mittellage zwischen zwei Metallplatten.

15. Herstellungsverfahren der Fasern nach einem der Ansprüche 1 bis 12 durch Innenzentrifugation.

## Claims

1. A glass fiber capable of dissolving in a physiological medium and provided in the form of mineral wool, **characterized in that** it exhibits a chemical composition comprising the following constituents within the limits defined below, expressed as percentages by weight:
| | |
|---|---|
| SiO₂ | 44 to 46.7 |
| Al₂O₃ | 18 to 21 |
| CaO | 1 to 8 |
| MgO | 0 to 3.5 |
| Na₂O | 15 to 21 |
| K₂O | 3 to 6 |
| B₂O₃ | 0 to 5 |
| Fe₂O₃ | 0 to 3 |
| P₂O₅ | 0 to 3. |

2. The glass fiber according to claim 1, wherein the content of sodium oxide is greater than or equal to 16%.

3. The glass fiber as claimed in one of the preceding claims, wherein the total content of alkali metal oxides is greater than or equal to 21%.

4. The glass fiber as claimed in one of the preceding claims, wherein the content of alumina is between 18 and 20%.

5. The glass fiber as claimed in one of the preceding claims, wherein the SiO₂/Al₂O₃ ratio is between 2.2 and 2.5.

6. The glass fiber as claimed in one of the preceding claims, wherein the content of potassium oxide is greater than or equal to 4%.

7. The glass fiber as claimed in one of the preceding claims, wherein the content of calcium oxide is greater than or equal to 4%.

8. The glass fiber as claimed in one of the preceding claims, wherein the content of magnesium oxide is greater than or equal to 1%.

9. The glass fiber as claimed in one of the preceding claims, wherein the content of boron oxide is less than or equal to 4.5%.

10. The glass fiber as claimed in one of the preceding claims, wherein iron oxide is present in amounts between 1 and 3%.

11. The glass fiber according to claim 1, which exhibits a chemical composition comprising the following constituents within the limits defined below, expressed as percentages by weight:
| | |
|---|---|
| SiO₂ | 44 to 46 |
| Al₂O₃ | 18 to 20 |
| CaO | 4 to 8 |
| MgO | 1 to 3.2 |
| Na₂O | 16.5 to 18.5 |
| K₂O | 4 to 5 |
| B₂O₃ | 3 to 5 |
| Fe₂O₃ | 0 to 3 |
| P₂O₅ | 0 to 3 |

12. The glass fiber as claimed in one of the preceding claims, obtainable by an internal spinning process.

13. The use of the glass fiber as claimed in one of claims 1 to 12 as thermal and/or acoustic insulation materials, as soilless culture substrates.

14. A structural part, comprising the glass fiber as claimed in one of claims 1 to 12 as insulating core between two metal panels.

15. A process for manufacturing the glass fiber as claimed in one of claims 1 to 12 using internal spinning method.
